# EUROPEAN PATENT SPECIFICATION

(11) **EP 4 174 628 B1**
(45) Date of publication and mention of the grant of the patent: **22.04.2026**
(21) Application number: 21831783.2
(22) Date of filing: 29.06.2021
(51) Int. Cl.: G06F 3/0482, G06F 3/04842, G06F 40/166

(54) **CONTENT EDITING METHOD AND APPARATUS, AND ELECTRONIC DEVICE**
INHALTSBEARBEITUNGSVERFAHREN UND -VORRICHTUNG UND ELEKTRONISCHE VORRICHTUNG
PROCÉDÉ ET APPAREIL D'ÉDITION DE CONTENU, ET DISPOSITIF ÉLECTRONIQUE

(30) Priority: 30.06.2020 CN 202010623090
(43) Date of publication of application: 03.05.2023
(73) Proprietor: Vivo Mobile Communication Co., Ltd., Dongguan, Guangdong 523863 (CN)
(72) Inventor: CHI, Xuehua, Dongguan, Guangdong 523863 (CN)
(74) Representative: Winter, Brandl - Partnerschaft mbB
(86) International application number: PCT/CN2021/102905
(87) International publication number: WO 2022/001999

(56) References cited:
- CN-A- 1 801 138
- CN-A- 104 424 169
- CN-A- 106 936 979
- CN-A- 108 519 846
- CN-A- 111 104 777
- CN-A- 111 913 631
- US-A1- 2017 337 159
- US-B1- 6 185 591

## Description

### TECHNICAL FIELD

This application pertains to the field of communications technologies, and specifically relates to a content editing method and apparatus, and an electronic device.

### BACKGROUND

With development of electronic technologies, functions of electronic devices are becoming more and more diverse. For example, a user may edit a document (for example, an excel document or a word document) by using an electronic device.

Currently, when the user edits a document (hereinafter referred to as a document a) by using the electronic device, if the user needs to modify edited content 1 in the document a, in one manner, the user may find the content 1 in the document a, and then directly modify the content 1; or in another manner, the user may trigger, by using a undo function of the document a, the electronic device to undo edited content to content 1 before the editing.

However, according to the foregoing method, in the foregoing one manner, when there is a large amount of edited content in the document 1, the user may not be able to quickly find the content 1. In the foregoing another manner, because the electronic device undoes editing of all other content edited after the content 1, the user needs to re-edit these pieces of content. Consequently, a speed of editing a document by the user may be relatively slow.

US 6 185 591 B1 discloses an edit system having an enhanced undo interface, wherein the edit system permits the selective display of undo elements intermixed in the edit view of the document with actual text elements and positioned relative to the affected text.

CN 1 801 138 A discloses a cancellation process in which multiple selected operations are checked in sequence and either all are cancelled if possible or, if any one cannot be cancelled, an immediate error is shown to the user.

### SUMMARY

The present invention is set out in the appended claims. Embodiments of this application aim to provide a content editing method and apparatus, and an electronic device, to resolve a problem that a speed of editing a document by a user is relatively slow.

In the embodiments of this application, the content editing apparatus may receive the first input for the target document (including the M first documents, where M is a positive integer), and undo editing of the first content in response to the first input, where the first content is content in the second document, the first content does not include the second content, the second content is content edited in the target document for the last time, and the second document is a document determined from the M first documents according to the first input. In this solution, the content editing apparatus may undo editing of the first content. It can be understood that, in this case, the content editing apparatus does not undo editing of content other than the first content in the target document, and therefore these pieces of content do not need to be re-edited. In this way, editing can be quickly undone, and a repeated editing operation can be avoided, thereby improving editing efficiency.

### BRIEF DESCRIPTION OF DRAWINGS

FIG 1 is a schematic diagram of a content editing method according to an embodiment of this application;
FIG 2 is a first schematic screen diagram of application of a content editing method according to an embodiment of this application;
FIG 3 is a second schematic screen diagram of application of a content editing method according to an embodiment of this application;
FIG 4 is a third schematic screen diagram of application of a content editing method according to an embodiment of this application;
FIG 5 is a fourth schematic screen diagram of application of a content editing method according to an embodiment of this application;
FIG 6 is a fifth schematic screen diagram of application of a content editing method according to an embodiment of this application;
FIG 7 is a schematic diagram of a content editing apparatus according to an embodiment of this application;
FIG 8 is a schematic diagram of an electronic device according to an embodiment of this application; and
FIG 9 is a schematic diagram of hardware of an electronic device according to an embodiment of this application.

### DESCRIPTION OF EMBODIMENTS

The following clearly describes the technical solutions in the embodiments of this application with reference to the accompanying drawings in the embodiments of this application.

In the specification and claims of this application, the terms "first", "second", and the like are intended to distinguish between similar objects but do not describe a specific order or sequence. It should be understood that the data used in such a way is interchangeable in proper circumstances so that the embodiments of this application can be implemented in an order other than the order illustrated or described herein. In addition, in the specification and the claims, "and/or" represents at least one of connected objects, and a character "/" generally represents an "or" relationship between associated objects.

A content editing method provided in the embodiments of this application may be applied to a scenario in which a user edits a document by using a content editing apparatus.

For example, when a user edits a document (hereinafter referred to as a document 2) by using an electronic device, the user needs to modify edited content 1 in a document a, where the content 1 is content other than content edited for the last time in the document a. In the related art, in one manner, the user may manually find the content 1 in the document a, and then directly modify the content 1. In this case, when there is a large amount of edited content in the document a, the user may not be able to quickly find the content 1, and thus it takes a long time for the user to find the content 1. In another manner, the user may trigger, by using a undo function of the document a, the electronic device to undo edited content to content 1 before the editing. In this case, because the electronic device undoes editing of all other content edited after the content 1, the user needs to re-edit these pieces of content, and thus it takes a long time for the user to re-edit the content that is unnecessarily undone. Consequently, a speed of editing a document by the user is relatively slow.

For the foregoing problem, in the technical solution provided in the embodiments of this application, after the content editing apparatus receives a first input performed by the user for the document a (the document a includes M first documents, and M is a positive integer), the content editing apparatus may undo editing of the content 1 in response to the first input, and keep editing of other content in the document a. In this way, the content editing apparatus may undo editing of the content 1. It can be understood that, in this case, the content editing apparatus does not undo editing of content other than the content 1 in the document a. In this way, editing of content can be quickly undone, and a repeated editing operation can be avoided, thereby improving editing efficiency.

With reference to the accompanying drawings, the content editing method provided in the embodiments of this application is described in detail by using specific embodiments and application scenarios.

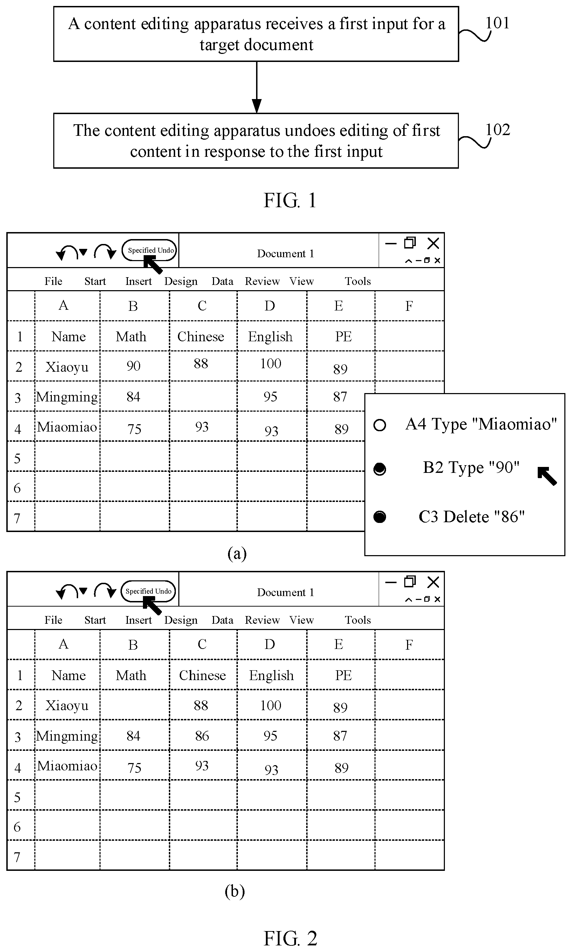

As shown in FIG 1, an embodiment of this application provides a content editing method. The method may include the following step 101 and step 102.

Step 101: A content editing apparatus receives a first input for a target document.

The target document may include M first documents, and M is a positive integer.

Optionally, in this embodiment of this application, the target document may be any editable document such as a word document, an excel document (also referred to as an electronic table), or a PowerPoint document (also referred to as a slideshow). This may be specifically determined according to an actual use requirement, and is not limited in this embodiment of this application.

Optionally, in this embodiment of this application, for each of the M first documents, one first document may be at least one page, at least one section, or at least one worksheet in the target document. This may be specifically determined according to an actual use requirement, and is not limited in this embodiment of this application. A section in the target document may be obtained through separation by using a section break in the target document. For example, assuming that the target document includes one section break, the section break may separate the target document into two sections.

Optionally, in this embodiment of this application, the first input may be an input performed by a user for the target document by using an input device (for example, a mouse or a keyboard), or a touch input performed by the user for the target document. This may be specifically determined according to an actual use requirement, and is not limited in this embodiment of this application.

Optionally, in this embodiment of this application, the first input may be specifically an input performed by the user for a first page, and the first page may be a display page of the target document. It can be understood that content in the target document may be displayed on the first page.

Step 102: The content editing apparatus undoes editing of first content in response to the first input.

The first content may be content in a second document, the first content does not include second content, the second content may be content edited by the content editing apparatus in the target document for the last time, the second document may be P first documents in the M first documents, and P is a positive integer less than or equal to M.

Optionally, in this embodiment of this application, the second document may be a first document in which the first page is located, or may be a first document (that is, P=1) in which a cursor is located, or may be the M first documents, or may be a first document that meets a preset condition. This may be specifically determined according to an actual use requirement, and is not limited in this embodiment of the present invention.

The preset condition may be at least one of the following: the first P first documents in the M first documents; the last P first documents in the M first documents; the first document in which the cursor is located and at least one first document after the first document in which the cursor is located in the M first documents; and P first documents before (after) the first document in which the cursor is located in the M first documents.

For example, the second document is the first document in which the first page is located. It is assumed that the target document is an electronic table, and the electronic table includes a worksheet 1 and a worksheet 2 (that is, M=2). If the user performs the first input for a display page of the worksheet 1 (that is, the first page), the second document is the worksheet 1 (P=1).

For another example, the second document is the first document in which the cursor is located. It is assumed that the target document is a word document, and the word document includes two sections (that is, M=2): a first section and a second section. If the content editing apparatus displays a display page of the first section, the cursor is located in the second section. Therefore, regardless of whether the user performs the first input for the display page of the first section or a display page of the second section, the second document is the second section (P=1).

It should be noted that the content editing method provided in this embodiment of this application is applicable not only to common editors such as a Word editor, an Excel editor, a PowerPoint editor, and a TXT editor, but also to any editor that can edit content, such as a Notepad++ editor, a Sublime text editor, an Atom editor, a VS code editor, and a UltraEdit editor.

Optionally, in this embodiment of this application, that the content editing apparatus undoes editing of one piece of content may include undoing typing, deletion, format modification, and the like of the content.

It should be noted that, in this embodiment of this application, when the content editing apparatus undoes editing of the first content, editing of content other than the first content in the target document is not undone.

In the content editing method provided in this embodiment of this application, the content editing apparatus may undo editing of the first content. It can be understood that, in this case, the content editing apparatus does not undo editing of content other than the first content in the target document, and therefore these pieces of content do not need to be re-edited. In this way, editing can be quickly undone, and a repeated editing operation can be avoided, thereby improving editing efficiency.

Optionally, in this embodiment of this application, before the content editing apparatus receives the first input performed by the user for the target document, the content editing apparatus may back up content in the M first documents in a unit of document in a process of editing the target document. Specifically, in a first manner, the content editing apparatus may back up all content in the M first documents. In a second manner, the content editing apparatus may back up editing content in the M first documents, where the editing content may be content edited between the i^{th} backup and the (i+1)^{th} backup, and i may be a positive integer.

Optionally, in this embodiment of this application, in the first manner, that is, in a case that the content editing apparatus backs up all the content in the M first documents, before step 101, the content editing method provided in this embodiment of this application may further include the following step 103.

Step 103: The content editing apparatus backs up all content in the M first documents in a unit of document, and records time information of this backup.

In this embodiment of this application, time information of one backup may indicate a time at which the backup is performed.

Optionally, in this embodiment of this application, for each of the M first documents, (1), the content editing apparatus may back up all the content in the M first documents in a unit of document and record time information of this backup when receiving an input that the user triggers the content editing apparatus to save content in the target document, that is, the user performs one save input, and the content editing apparatus may perform a save action and a backup action. Alternatively, (2), after editing one piece of content, the content editing apparatus backs up, in a unit of document, all content in a document in which the content is located. In this case, a backup time of the content is the same as an editing time of the content. (3), The content editing apparatus may automatically back up all the content in the M first documents in a unit of document according to a preset quantity of editing times (which is determined according to an actual use requirement). This may be specifically determined according to an actual use requirement, and is not limited in this embodiment of this application.

Optionally, in this embodiment of this application, for one first document, in the foregoing (1), backup content obtained through each backup may be all content in the first document after the first document is edited at least once. In the foregoing (2), backup content obtained through each backup may be content obtained after the first document is edited once.

Optionally, in this embodiment of this application, for each of the M first documents, after backing up all content in one first document once in a unit of document, the content editing apparatus may obtain a first tracing point record corresponding to the first document.

Optionally, in this embodiment of this application, the first tracing point record may include an identifier of the first document (for example, a name of the first document), backup time information, and backup content, where the backup content is all content in the first document corresponding to the first tracing point record during the backup.

It can be understood that, in this embodiment of this application, the M first documents correspond to M groups of first tracing point records, the M first documents are in a one-to-one correspondence with the M groups of first tracing point records, and a quantity of first tracing point records included in each group of first tracing point records may be determined according to an actual use requirement. In this embodiment of this application, if some first documents are not backed up, a group of first tracing point records corresponding to these first documents is empty, that is, there is no first tracing point record.

Optionally, in this embodiment of this application, the first tracing point record may further include a name of the user who edits the first document during the backup.

It should be noted that, in this embodiment of this application, the content editing apparatus may store, in an electronic device or a server in a unit of document, the M groups of first tracing point records obtained by backing up the M first document. This may be specifically determined according to an actual use requirement, and is not limited in this embodiment of this application.

Optionally, in this embodiment of this application, the content editing apparatus may store the M groups of first tracing point records in a dictionary form, or may store the M groups of first tracing point records in any other possible form. This may be specifically determined according to an actual use requirement, and is not limited in this embodiment of this application.

Optionally, in this embodiment of this application, the content editing apparatus backs up the M groups of first tracing point records in a unit of document, and each first tracing point record includes an identifier of a document. Therefore, the content editing apparatus may find, by using an identifier of each first document as a key (key), a group of first tracing point records (a value corresponding to the key) corresponding to each first document in the M groups of first tracing point records.

In this embodiment of this application, the content editing apparatus may back up all content in each first document of the target document in a unit of document, and record backup time information. Therefore, the content editing apparatus may find, according to an identifier of each first document and/or the backup time information, backup content corresponding to each first document, so that accuracy of searching for backup content can be improved.

Optionally, in this embodiment of this application, in the second manner, that is, in a case that the content editing apparatus backs up editing content in the M first documents in a unit of document, before step 101, the content editing method provided in this embodiment of this application may further include the following step 104.

Step 104: The content editing apparatus backs up editing content in the M first documents in a unit of document.

The editing content may be content edited between the i^{th} backup and the (i+1)^{th} backup, and i may be a positive integer, that is, the editing content is content edited between a previous backup and a current backup. For example, the content editing apparatus backs up editing content in one first document. If the content editing apparatus edits content a and content b in the first document after the content editing apparatus backs up editing content in the first document for the first time (that is, i=1) and before backs up editing content in the first document for the second time, when the content editing apparatus backs up the first document for the second time, the content a and the content b may be backed up in a unit of document, that is, the editing content backed up for the second time is the content a and the content b.

Optionally, in this embodiment of this application, for each of the M first documents, after backing up editing content in one first document once in a unit of document, the content editing apparatus may obtain a second tracing point record corresponding to the first document, where the second tracing point record may include the editing content.

Optionally, in this embodiment of this application, the second tracing point record may include an identifier of the first document, backup time information, location information, and editing content. The location information may indicate a region in which editing content in the second tracing point record is located in the first document. For example, the location information may be coordinate information corresponding to the editing content.

In this embodiment of this application, the M first documents may correspond to M groups of second tracing point records, the M first documents are in a one-to-one correspondence with the M groups of second tracing point records, and a quantity of second tracing point records included in each group of second tracing point records may be determined according to an actual use requirement.

For example, if the target document is an excel document, and the excel document includes a worksheet 1 and a worksheet 2, the worksheet 1 may correspond to the 1^{st} group of second tracing point records, and the 1^{st} group of second tracing point records includes three second tracing point records:
{worksheet 1: {time information 1, location information 1, editing content 1};
{time information 2, location information 2, editing content 2}; and
{time information 3, location information 3, editing content 3}}.

Correspondingly, the worksheet 2 may correspond to the 2^{nd} group of second tracing point records, and the 2^{nd} group of second tracing point records includes two second tracing point records:
{worksheet 2: {time information 4, location information 4, editing content 4}; and
{time information 5, location information 5, editing content 6}}.

For other descriptions of step 104, refer to the related descriptions of step 103. To avoid repetition, details are not described herein again.

It can be understood that in this embodiment of this application, assuming that the content editing apparatus backs up the M first documents for i+1 times in a unit of document, editing content backed up for the (i+1)^{th} time may include the foregoing second content.

In this embodiment of this application, the content editing apparatus may back up editing content in the M first documents in a unit of document. Therefore, the content editing apparatus may find, according to an identifier of each first document, at least a part of editing content corresponding to each first document, and may perform an editing undoing operation for the editing content in each first document. In this way, flexibility of editing undoing can be improved to improve editing efficiency.

With reference to the foregoing two backup manners (that is, the first manner and the second manner), the following exemplarily describes a method for undoing editing of the first content by the content editing apparatus in three possible implementations (that is, the following first possible implementation, the following second possible implementation, and the following third possible implementation).

### First possible implementation

Optionally, in this embodiment of this application, in the first possible implementation, the content editing apparatus may specifically undo editing of content in reverse order of backup times in a unit of document.

Optionally, in this embodiment of this application, when the second content is not content in the second document, the first content may be content that is in the second document and that has been edited for the last T times, and T is a positive integer. When the second content is content in the second document, the content editing apparatus may undo editing of other content in the second document in reverse order of backup times in a case that editing of the second content remains unchanged. Certainly, in actual implementation, the content editing apparatus may first undo editing of the second content in reverse order of backup times. This may be specifically determined according to an actual use requirement, and is not limited in this embodiment of this application. For ease of description, in the following embodiments, that the second content is not content in the second document is used as an example.

Optionally, in this embodiment of this application, a first control may be disposed on the display page of the target document, and the first control may be used to trigger the content editing apparatus to undo editing of content in reverse order of backup times in a unit of document. The first input may be an input performed by the user for the first control, and if the user performs the first input once, the content editing apparatus can undo content that is in the second document and that has been edited for the last T times.

Optionally, in this embodiment of this application, after receiving the first input performed by the user for the first control, the content editing apparatus may select the second document from the M first documents in response to the first input, obtain first backup information corresponding to the second document, determine the first content according to the first backup information, and undo editing of the first content. For example, the content editing apparatus may obtain, from the server according to an identifier of the second document, the first backup information corresponding to the second document. For descriptions of the second document, refer to the related descriptions of the second document in step 102. To avoid repetition, details are not described herein again.

Optionally, in this embodiment of this application, in the foregoing first manner, the content editing apparatus may determine the first content according to the first backup information by using a method A. In the foregoing second manner, the content editing apparatus may determine the first content according to the first backup information by using a method B.

The following separately describes the method A and the method B in detail.

### Method A

Optionally, in this embodiment of this application, in the method A, the first backup information may be a group of first tracing point records corresponding to the second document. It is assumed that first tracing point records in the first backup information are arranged in reverse order of backup times. If the second content is not content in the second document, the content editing apparatus may compare content X1 with content X2, and determine content that is in the content X1 and that is different from the content X2 as the first content. The content X1 may be backup content in the 1^{st} first tracing point record in the first backup information, the content X2 may be backup content in the j^{th} first tracing point record in the first backup information, and j is a positive integer greater than or equal to 2.

It can be understood that, in this embodiment of this application, the content that is in the content X1 and that is different from the content X2 is content that is in the second document and that has been edited for the last T times, that is, the first content. For example, assuming that j=2, the backup content in the 1^{st} first tracing point record in the first backup information corresponding to the second document is "Meet at the front gate of Chunfeng Mansion at 10:00 on Wednesday morning", and backup content in the 2^{nd} first tracing point record is "Meet at the front gate of Chunfeng Mansion on Thursday morning", content edited in the second document for the last time is "10:00", that is, the first content is "10:00".

In this embodiment of this application, when the content editing apparatus compares the two pieces of content, the content editing apparatus may compare the two pieces of content in a one-to-one correspondence of location information. For example, it is assumed that the second document is a worksheet, j=2, the following table 1 is backup content in the 1^{st} first tracing point record in the first backup information, and the following table 2 is backup content in the 2^{nd} first tracing point record in the first backup information.

**Table 1**

| | A | B | C |
|---|---|---|---|
| 1 | 80 | 78 | 60 |

**Table 2**

| | A | B | C |
|---|---|---|---|
| 1 | 80 | | 60 |

Referring to the foregoing Table 1 and the foregoing Table 2, the content editing apparatus may specifically compare "80" in a cell A1 in Table 1 with "80" in a cell A1 in Table 2, compare "78" in a cell B1 in Table 1 with "" (empty content) in a cell B1 in Table 2, and compare "60" in a cell C1 in Table 1 with "60" in a cell C1 in Table 2. In this way, it can be learned that "78" in the cell B1 in Table 1 is different from "" in the cell B1 in Table 2, so that the content editing apparatus can determine "78" in the cell B1 in Table 1 as the first content.

For descriptions of the group of first tracing point records, refer to the related descriptions of the group of first tracing point records in the foregoing embodiment. To avoid repetition, details are not described herein again.

### Method B

Optionally, in this embodiment of this application, in the method B, the first backup information is a group of second tracing point records corresponding to the second document, and second tracing point records in the first backup information are arranged in reverse order of backup times. If the second content is not content in the second document, the content editing apparatus may determine editing content in the first T second tracing point records in the first backup information as the first content, where T is a positive integer. If the second content is content in the second document, the content editing apparatus may determine editing content other than editing content in the 1^{st} second tracing point record in the first T+1 second tracing point records in the first backup information as the first content, where T may be a positive integer.

Certainly, in actual implementation, in this embodiment of this application, when the second content is content in the second document, the content editing apparatus may directly determine editing content in the first T+1 second tracing point records in the first backup information.

The following exemplarily describes the method B with reference to a specific instance.

For example, the following Table 3 shows first backup information corresponding to a worksheet 1 in an excel document (the target document), including three second tracing point records, which are specifically shown in Table 1.

**Table 3**

| Identifier of the document | Backup time information | Location information | Editing content |
|---|---|---|---|
| Worksheet 1 | 2020.05.20 12:55 | A3 | Type "Yes" |
| Worksheet 1 | 2020.05.20 12:57 | B7 | Type "457" |
| Worksheet 1 | 2020.05.20 13:01 | D3 | Delete "56" |

As shown in the foregoing Table 3, assuming T=1, if the user clicks a first control in a display page of the worksheet 1 once, the content editing apparatus may directly undo deletion of "56" in a cell D3. That is, the content editing apparatus may specifically undo editing of content in the second document in reverse order of backup times.

Optionally, in this embodiment of this application, the user may continuously perform a plurality of clicks (that is, perform a plurality of first inputs) for the first control displayed on the first page, to trigger the content editing apparatus to successively undo editing of content in the second document in reverse order of backup times.

In this embodiment of this application, when undoing editing of content in the second document in reverse order of backup times, the content editing apparatus may keep content in another first document in the target document unchanged.

For example, it is assumed that the target document is an excel document, and the electronic document includes a worksheet 1 and a worksheet 2 (that is, M=2). The following Table 4 shows an editing record list of the user (on the target document). Specifically, as shown in Table 4, the user types "Yes" in a cell A3 of the worksheet 1 at 12:55; the user types "457" in a cell B7 of the worksheet 1 at 12:57; the user types "Total" in a cell E30 at 12:59; the user deletes "56" in a cell D3 at 13:01; and the user types "78" in a cell D29 of the worksheet 2 at 13:02. In addition, each time an editing operation is performed, the content editing apparatus performs a backup operation once.

**Table 4**

| Editing object | Backup time information | Location information | Editing content |
|---|---|---|---|
| Worksheet 1 | 12:55 | A3 | Type "Yes" |
| Worksheet 1 | 12:57 | B7 | Type "457" |
| Worksheet 2 | 12:59 | E30 | Type "Total" |
| Worksheet 1 | 13:01 | D3 | Delete "56" |
| Worksheet 2 | 13:02 | D29 | Type "78" |

As shown in the foregoing Table 4, if the second document is the worksheet 1, and T=2, when the user clicks the first control on the display page of the worksheet 1 once, the content editing apparatus may directly undo deletion of "56" in the cell D3 of the worksheet 1, and undo typing of "457" in the cell B7 of the worksheet 1; and keep"78" typed in the cell D29 and "Total" typed in the cell E30 of the worksheet 2 unchanged.

For descriptions of the group of second tracing point records, refer to the related descriptions of the group of second tracing point records in the foregoing embodiment. To avoid repetition, details are not described herein again.

In this embodiment of this application, in the first possible implementation, when the user triggers the content editing apparatus to undo editing of content in reverse order of backup times in a unit of document, the content editing apparatus may distinguish between documents for performing a backoff operation, so that editing of a document other than the second document in the target document can be maintained, thereby avoiding repeated work, greatly improving efficiency of modification undoing, and improving user experience of a undo function.

Optionally, in this embodiment of this application, in the second possible implementation, the content editing apparatus may specifically undo, in a unit of document, editing of content that is in the second document and that is indicated by an editing label selected by an input of the user (for example, the following fourth sub-input).

Optionally, in this embodiment of this application, in the second possible implementation, the first input may include a third sub-input and a fourth sub-input. Step 102 may be specifically implemented by using the following step 102a and step 102b.

Step 102a: The content editing apparatus selects the second document from the M first documents in response to the third sub-input, and displays K editing labels corresponding to the second document.

Step 102b: The content editing apparatus selects a first editing label from the K editing labels in response to the fourth sub-input, and undoes editing of the first content.

Each of the K editing labels may be used to indicate one time of editing of the second document. The foregoing first content may be content indicated by the first editing label.

Optionally, in this embodiment of this application, an editing label may include location information and editing content, where the location information is in a one-to-one correspondence with the editing content. For example, an editing label may be: {A31, Type "Is"}, indicating that "Is" is typed in a cell A31; or may be {A41, Delete "May"}, indicating that "May" is deleted from a cell A41.

Optionally, in this embodiment of this application, an editing label may further include the identifier of the second document. For example, an editing label may be {name of the second document, location information, editing content}.

Optionally, in this embodiment of this application, the third sub-input may be an input performed by the user for the second control, and the second control may be displayed on the first page. The second control may be used to trigger the content editing apparatus to display editing labels corresponding to Q first documents in the M first documents, where Q is a positive integer, and Q is less than or equal to M.

Optionally, in this embodiment of this application, Q=P, that is, after the user performs an input for the second control, the content editing apparatus may select the Q first documents from the M first documents, determine the Q first documents as the second document, obtain second backup information corresponding to the second document, and generate the K editing labels according to the second backup information.

Optionally, in this embodiment of this application, in the foregoing first manner, the content editing apparatus may generate the K editing labels according to the second backup information by using a method C. In the foregoing second manner, the content editing apparatus may generate the K editing labels according to the second backup information by using a method D.

The following separately exemplarily describes the method C and the method D.

### Method C

Optionally, in this embodiment of this application, in the method C, the second backup information may be a group of first tracing point records corresponding to the second document. It is assumed that the second backup information includes K+1 first tracing point records, and the K+1 first tracing point records are arranged in reverse order of backup times. In this case, the content editing apparatus may determine content that is in content X3 and that is different from content X4 as one piece of differential backup content, and determine backup time information corresponding to the content X3 as time information of the differential backup content. The content X3 is backup content in the s^{th} first tracing point record in the second backup information, the content X4 is backup content in the (s+1)^{th} first tracing point record in the second backup information, and s may be a positive integer greater than 1 and less than or equal to K. In this way, the content editing apparatus may obtain K pieces of differential backup content according to the K+1 first tracing point records. After the content editing apparatus determines the K pieces of differential backup content, for each piece of differential backup content in the K pieces of differential content, the content editing apparatus may determine one piece of differential backup content as editing content in one editing label, and determine location information corresponding to the one piece of differential backup content as location information in the one editing label, where the K pieces of differential backup content are in a one-to-one correspondence with the K editing labels. Therefore, the content editing apparatus may determine the K editing labels corresponding to the second document.

Optionally, in this embodiment of this application, for each of the K editing labels, one editing label may correspond to one piece of backup time information, and the backup time information may be time information of differential backup content corresponding to the editing label.

For other descriptions in the method C, refer to the related descriptions in the method A. To avoid repetition, details are not described herein again.

### Method D

Optionally, in this embodiment of this application, in the method D, the second backup information may be a group of second tracing point records corresponding to the second document.

Optionally, in this embodiment of this application, assuming that the second backup information includes K second tracing point records, the content editing apparatus may obtain editing content and location information in each of the K second tracing point records, and generate one editing label according to the obtained editing content and location information, to obtain the K editing labels.

Optionally, in this embodiment of this application, in the foregoing method C and method D, the K editing labels may be arranged in reverse order of backup time information corresponding to each editing label.

Optionally, in this embodiment of this application, when the content editing apparatus displays the K editing labels, for each of the K editing labels, one editing label may correspond to one check box. When the user clicks one editing label (for example, the following fourth sub-input), the content editing apparatus may update the check box corresponding to the editing label from an unselected state to a selected state, so that the user can visually view the selected editing label.

Optionally, in this embodiment of this application, the fourth sub-input may be an input performed by the user for the first editing label in the K editing labels.

In this embodiment of this application, there may be one or more first editing labels. This may be specifically determined according to an actual use requirement, and is not limited in this embodiment of this application.

For descriptions of the group of first tracing point records and the group of second tracing point records, refer to the related descriptions in the foregoing embodiment. To avoid repetition, details are not described herein again.

For other descriptions of step 102a and step 102b, refer to the related descriptions of step 102. To avoid repetition, details are not described herein again.

The following exemplarily describes the second possible implementation with reference to FIG 2.

For example, it is assumed that the target document is an excel document and may include a worksheet 1 and a worksheet 2, and the second document is the first document in which a page corresponding to the first sub-input is located. A display page of the worksheet 1 is shown in (a) in FIG 2. After the user clicks a "specified undo" control (that is, the second control), the content editing apparatus may select the worksheet 1 and display three editing labels (that is, K=3) corresponding to the worksheet 1: {A4 Type "Miaomiao"}, {B2 Type "90"}, and {C3 Delete "86"}. If the user clicks {B2 Type "90"} and {C3 Delete "86"}, as shown in (b) in FIG. 2, the content editing apparatus may select {B2 Type "90"} and {C3 Delete "86"}, undo typing of "90 "in B2, undo deletion of "86" in C3, and keep "Miaomiao" in A4 unchanged. It can be learned that the first content is "90" and "86", and the second document is the worksheet 1. In this example, the user may trigger, according to an actual editing requirement of the user, the content editing apparatus to display editing labels corresponding to some first documents in the target document, so that the user can trigger the content editing apparatus to edit specified content in these first documents without undoing editing of content in a document in reverse order of backup times. Therefore, flexibility of editing undoing can be further improved in a case that editing of content in other first documents in the target document keeps unchanged, to improve editing efficiency.

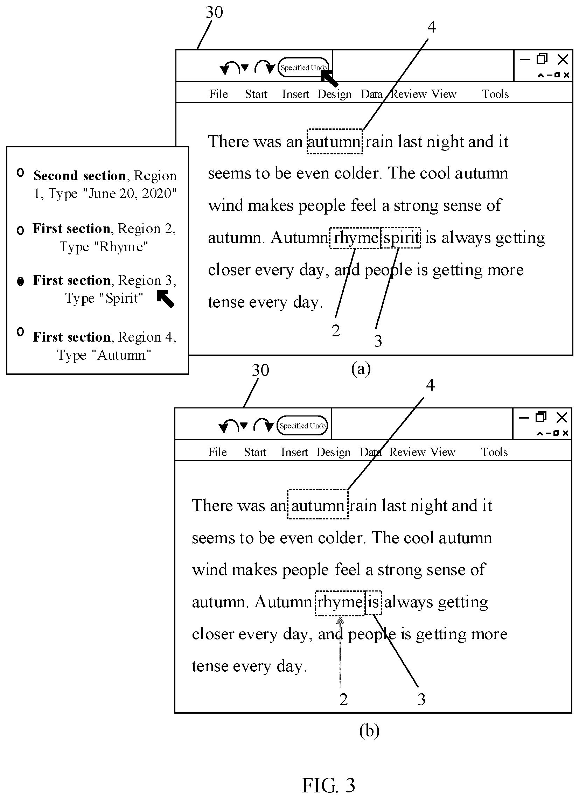

For another example, it is assumed that the target document is a word document, and the word document may include two sections: a first section and a second section. A display page 30 of the first section is shown in (a) in FIG 3. After the user clicks a "specified undo" control (that is, the second control), the content editing apparatus may display four editing labels corresponding to the word document (which are all editing labels corresponding to the word document). In reverse order of backup times, the four editing labels are {Second section, Region 1, Type "June 20, 2020"}, {First section, Region 2, Type "Rhyme"}, {First section, Region 3, Type "Spirit"}, and {First section, Region 4, Type "Autumn"}. In this case, if the user clicks the editing label {First section, Region 3, Type "Spirit"}, as shown in (b) in FIG 3, the content editing apparatus may undo typing of "Spirit" in the region 3 in the first section, and keep "June 20, 2020" in the region 1 in the second section, "Rhyme" in the region 2 in the first section, and "Autumn" in the region 4 in the first section unchanged. It can be learned that in the example, the first content is "Spirit" and the second document is the first section. In this example, the content editing apparatus may display an editing label corresponding to the target document. Therefore, the user may undo editing of content in the target document according to an actual use requirement of the user, so that flexibility of editing undoing can be further improved, to improve editing efficiency.

It should be noted that, in this embodiment of this application, display positions of the editing label in FIG 2 and the editing label in FIG 3 are merely an example. In actual implementation, these editing labels are all displayed on the display page of the target document.

In this embodiment of this application, in the second possible implementation, the user may trigger the content editing apparatus to undo editing of specified content in the second document according to an actual editing requirement of the user, and does not need to undo editing of content in the second document in reverse chronological order. Therefore, flexibility and convenience of editing undoing can be further improved in a case that editing of content in other first documents in the target document keeps unchanged, to improve editing efficiency.

Optionally, in this embodiment of this application, the first control and the second control may be directly displayed on the first page, or may be hidden on the first page. This may be specifically determined according to an actual use requirement, and is not limited in this embodiment of this application.

Optionally, in this embodiment of this application, when the first control and the second control are hidden on the first page, in the first possible implementation and the second possible implementation, before step 101, the content editing method provided in this application may further include the following step 105 and step 106.

Step 105: The content editing apparatus receives a third input for the target document.

Step 106: The content editing apparatus displays a first control and a second control in response to the third input.

The first control may be used to trigger, in reverse order of backup times in a unit of document, the content editing apparatus to undo editing of content; the second control may be used to trigger the content editing apparatus to display editing labels corresponding to Q first documents; and the first input may include an input for the first control or the second control, Q may be a positive integer, and Q is less than or equal to M. It can be understood that in this embodiment of this application, when the user performs an input (for example, the foregoing first input) for the first control, the content editing apparatus may undo editing of content (for example, the foregoing first content) in reverse order of backup times in a unit of document.

For descriptions of the first control and the second control, refer to the related descriptions in the first possible implementation and the second possible implementation. To avoid repetition, details are not described herein again.

Optionally, in this embodiment of this application, the second input may be specifically an input performed by the user on the first page. For example, the first page may include a "undo" identifier, and the second input may be specifically an input for the "undo" identifier.

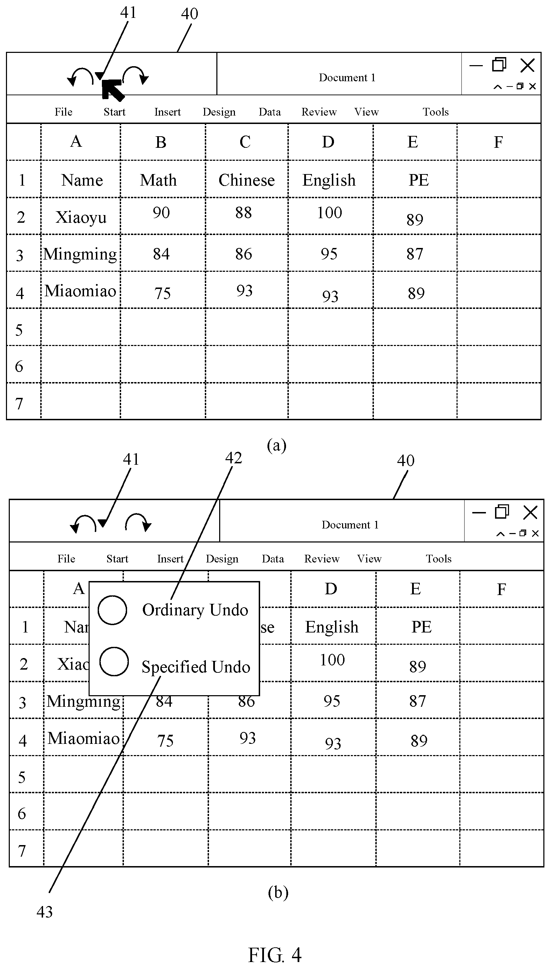

For example, a display page 40 (that is, the first page) of the target document is shown in (a) in FIG 4. The user may click a "undo" identifier 41 on the first page, that is, the content editing apparatus receives the second input performed by the user on the target document, and then the content editing apparatus may respond to the second input. As shown in (b) in FIG 4, the content editing apparatus may display a common undo control 42 (that is, the first control) and a specified undo control 43 (that is, the second control).

In this embodiment of this application, the user may trigger, through the second input, the content editing apparatus to display the first control and the second control on the first page. Therefore, the user may trigger the content editing apparatus to undo editing of content in the second document according to an actual undo requirement of the user through an input for the first control or the second control. In this way, flexibility of editing undoing can be further improved.

### Third possible implementation

Optionally, in this embodiment of this application, in the third possible implementation, the first input may be an input for the first content. Specifically, the user may perform the first input in a region in which the first content is located, trigger the content editing apparatus to select the first content, and undo editing of the first content.

Optionally, in this embodiment of this application, before performing the first input, the user may first trigger the content editing apparatus to highlight the region in which the first content is located, so that the user quickly locates the region in which the first content is located, and performs the first input for the first content. That the content editing apparatus highlights the region in which the first content is located is specifically described in the following embodiment. To avoid repetition, details are not described herein again.

In this embodiment of this application, in the third possible implementation, because the content editing apparatus may highlight the region in which the first content is located, the user may intuitively view the region in which the first content is located in the second document, and may determine, according to content in a region adjacent to the region in which the first content is located, whether to undo editing of the first content, thereby improving accuracy of undoing editing of content.

The following exemplarily describes a method for highlighting the region in which the first content is located by the content editing apparatus.

Optionally, in this embodiment of this application, in the third possible implementation, before step 101, the content editing method provided in this embodiment of this application may further include the following step 107 and step 108.

Step 107: The content editing apparatus receives a second input for the target document.

Optionally, in this embodiment of this application, the second input may be an input for the first page. For other descriptions of step 107, refer to the related descriptions of step 101. To avoid repetition, details are not described herein again.

Step 108: The content editing apparatus displays, in a first manner in response to the second input, a region in which third content.

The first manner may be different from a second manner, and the second manner may be a manner of displaying a region in which fourth content is located. The third content may be content edited in the second document within first duration, and the third content and the fourth content may be different content in the second document.

Optionally, in this embodiment of this application, the first content may be content in the third content.

In this embodiment of this application, the first duration may be less than total duration of editing the second document. For example, assuming that the user triggers the content editing apparatus to edit the second document within a time range of [t1, t2], that is, the total duration of editing the second document is t2+t1, the first duration may be t4-t3, where t1 is less than or equal to t3, t3 is less than t4, and t4 is less than t2.

For descriptions of the second document, refer to the related descriptions of the second document in step 102. To avoid repetition, details are not described herein again.

In an embodiment not according to the claims, the first duration may be preset (which may be preset in a system or may be defined by the user). In the claimed embodiment, the first duration is determined according to the second input.

Optionally, in this embodiment of this application, for ease of description, a region in which the third content is located is referred to as a region A, and the two have the same meaning and may be interchanged. In addition, a region in which the fourth content is located is referred to as a region B, and the two have the same meaning and may be interchanged. That the content editing apparatus displays the region A in the first manner may be specifically: the region A is displayed through highlighting, and the region B is not displayed through highlighting; or a first color is used as a background color of the region A, and a second color is used as a background color of the region B, where the first color is different from the second color; or a "restore" identifier is set in the region A, and a "restore" identifier is not set in the region B.

For example, assuming that the background color of the region B is white, the content editing apparatus may set the background color of the region A to any color that is different from white, such as red, yellow, or blue.

For another example, the content editing apparatus may set the "restore" identifier in the region A. The user may trigger, through an input for the "restore" identifier, the content editing apparatus to undo editing of content in a region indicated by the "restore" identifier. It can be understood that the "restore" identifier is not set in the region B.

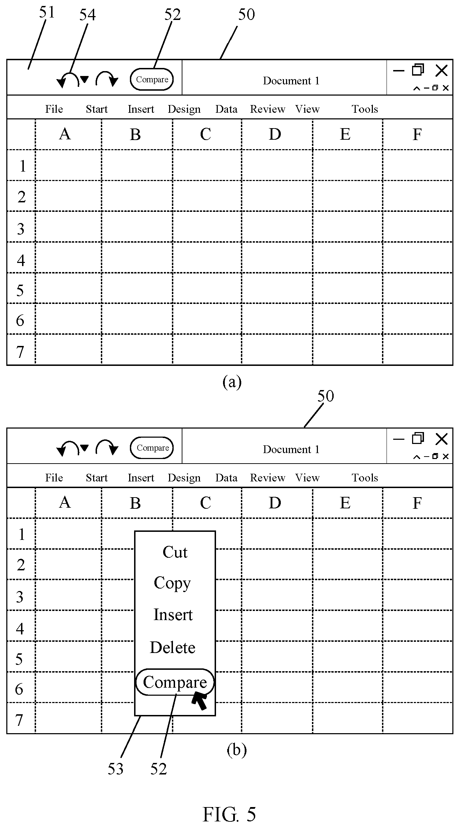

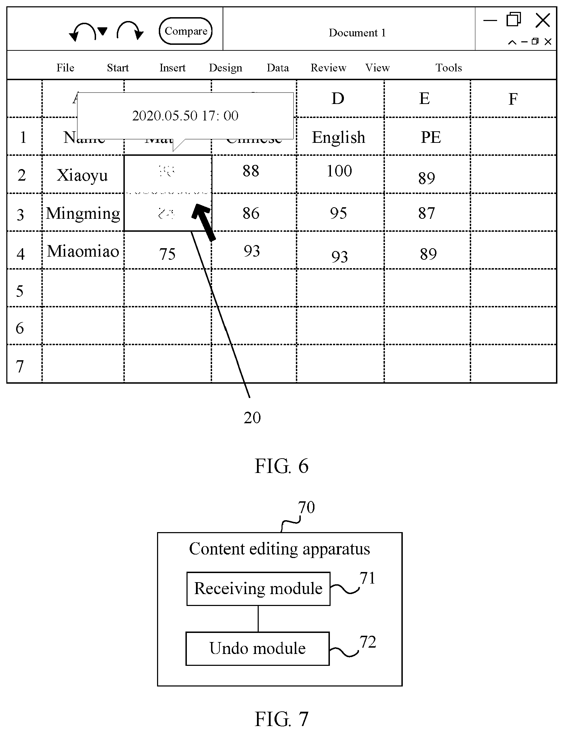

Optionally, in this embodiment of this application, for each piece of content in the third content, the content editing apparatus may set backup time information of the content in a region in which the content is located. When the user moves a cursor (for example, a cursor of a mouse shown in FIG 6) to the region (for example, a filling region 20 shown in FIG 6), the content editing apparatus may display the backup time information of the content (for example, time information "2020.05.20 17:00" shown in FIG. 5).

In this embodiment of this application, because the content editing apparatus may display, in different manners, the region in which the third content is located and the region in which the fourth content is located, the user can quickly locate the content edited in the second document within the first duration, so that a content search range can be narrowed and a search speed can be improved.

Optionally, in this embodiment of this application, when the first duration is determined according to the second input, the second input may specifically include a first sub-input and a second sub-input. Step 108 may be specifically implemented by using the following step 108a and step 108b.

Step 108a: The content editing apparatus selects the second document from the M first documents in response to the first sub-input, and displays N pieces of time information corresponding to the second document. Each of the N pieces of time information may be used to indicate a time at which the content editing apparatus backs up the second document once, and N may be a positive integer.

In this embodiment of this application, the first duration may be specifically determined according to a time indicated by target time information. For example, assuming that the target time information includes: 2020.05.20 12:55, 2020.05.20 13:05, and 2020.05.20 13:10, the first duration may be a time range from 13:10 to 13:05.

Optionally, in this embodiment of this application, the first sub-input may be specifically an input for a third control on the first page. The third control may be displayed on the first page, or may be hidden on the first page. This may be specifically determined according to an actual use requirement. For example, the user performs the first sub-input by using a mouse. It is assumed that the third control is displayed on the first page. As shown in (a) in FIG. 5, the content editing apparatus displays a first page 50, a quick access toolbar 51 on the first page 50 displays a compare control 52 (that is, the third control), and the first sub-input may be a click input performed by the user for the compare control 52 by using the mouse. For another example, the user performs an input by using a mouse. It is assumed that the third control is hidden on the first page. As shown in (a) in FIG 5, the content editing apparatus displays a first page 50. If the user may click the right mouse button, as shown in (b) in FIG 5, the content editing apparatus may display a shortcut menu 53. The shortcut menu 53 includes a compare control 52 (that is, the third control), and the first sub-input may be a click input performed by the user for the compare control 52 by using the mouse.

Optionally, in this embodiment of this application, before displaying the N pieces of time information corresponding to the second document, the content editing apparatus may first determine, according to the identifier of the second document, third backup information corresponding to the second document, and then determine, according to the third backup information, the N pieces of time information corresponding to the second document. The N pieces of time information may be all or a part of backup time information in the third backup information. The third backup information is described in detail in the following embodiment. To avoid repetition, details are not described herein again.

Optionally, in this embodiment of this application, the second sub-input may be an input performed by the user for the target time information in the N pieces of time information. The target time information may include at least one piece of time information. This may be specifically determined according to an actual use requirement, and is not limited in this embodiment of this application.

Step 108b: In response to the second sub-input, the content editing apparatus selects target time information from the N pieces of time information, determines target editing content corresponding to the target time information as the third content, and displays, in the first manner, the region in which the third content is located.

It can be understood that, in this embodiment of this application, the target editing content may be editing content in all editing content corresponding to the second document. The target editing content is described in detail in the following embodiment. To avoid repetition, details are not described herein again.

In this embodiment of this application, after receiving the second sub-input from the user, the content editing apparatus may obtain, in response to the second sub-input, a third group of tracing point records corresponding to the target time information from the third backup information. Then, the content editing apparatus may determine, according to the third group of tracing point records, the target editing content corresponding to the target time information, and determine the target editing content as the first content.

Optionally, in this embodiment of this application, the third backup information is different, and a method for determining, by the content editing apparatus according to the third group of tracing point records, the target editing content corresponding to the target time information is also different. Specifically, when the third backup information is the group of first tracing point records corresponding to the second document, that is, in the foregoing first manner, the content editing apparatus may determine the target editing content according to the third group of tracing point records by using a method E. When the third backup information is the group of second tracing point records corresponding to the second document, that is, in the foregoing second manner, the content editing apparatus may determine the target editing content according to the third group of tracing point records by using a method F.

The following separately exemplarily describes the method E and the method F.

### Method E

Optionally, in this embodiment of this application, in the method E, the third group of tracing point records is a group of tracing point records formed by at least one first tracing point record in the group of first tracing point records corresponding to the second document. Assuming that the target time information is L pieces of time information, the third group of tracing point records may include L first tracing point records corresponding to the second document, and L may be a positive integer.

Optionally, in this embodiment of this application, it is assumed that the L first tracing point records are arranged in reverse order of backup times. Case 1: If L=1, content editing apparatus may determine content that is in content X5 and that is different from content X6 as the target editing content corresponding to the target time information, where the content X5 may be current content of the second document, and the content X6 may be backup content in the L first tracing point records. Case 2: If L is greater than 1, the content editing apparatus may determine content that is in content X7 and that is different from content X8 as the target editing content corresponding to the target time information, where the content X7 may be backup content in the 1^{st} first tracing point record in the L first tracing point records, and the content X8 may be backup content in the L^{th} first tracing point record in the L first tracing point records.

Optionally, in this embodiment of this application, in the foregoing case 1, the first duration may be specifically a time difference between a time indicated by the target time information and current system time of the electronic device. In the foregoing case 2, the first duration may be specifically a maximum time difference between times indicated by the target time information. For example, the target time information includes time information 1, time information 2, and time information 3. If a time indicated by the time information 1 is 12:00, a time indicated by the time information 2 is 12:05, and a time indicated by the time information 3 is 12:07, the first duration may be a time difference between 12:00 and 12:07.

For other descriptions in the method E, refer to the related descriptions in the method A in the foregoing embodiment. To avoid repetition, details are not described herein again.

### Method F

Optionally, in this embodiment of this application, in the method F, the third group of tracing point records is a group of tracing point records formed by at least one second tracing point record in the group of second tracing point records corresponding to the second document. Specifically, the third group of tracing point records may include a second tracing point record that is in the group of second tracing point records corresponding to the second document and whose backup time information is the target time information.

Optionally, in this embodiment of this application, the content editing apparatus may determine all editing content in the third group of tracing point records as the target editing content corresponding to the target time information.

In this embodiment of this application, after determining the target editing content corresponding to the target time information, the content editing apparatus may determine the target editing content as the third content, and display the third content in the first manner. For descriptions of the first manner, refer to the related descriptions of step 108. To avoid repetition, details are not described herein again.

In this embodiment of this application, the target editing content is the same as content edited in the second document within the first duration, and both are the third content.

In this embodiment of this application, because the content editing apparatus may determine the target editing content corresponding to the target time information as the third content, after the content editing apparatus displays, in a manner different from a display manner of the fourth content, the region in which the third content is located, the user can quickly locate content edited within the first duration. In this way, the user can quickly find content that is of the second document and that is edited in different time ranges, thereby improving a speed of searching for editing content.

It should be noted that the content editing method provided in the embodiments of this application may be performed by a content editing apparatus, or a control module that is in the content editing apparatus and that is configured to perform the content editing method. In the embodiments of this application, that the content editing apparatus performs the content editing method is used as an example to describe the content editing apparatus provided in the embodiments of this application.

As shown in FIG 7, an embodiment of this application provides a content editing apparatus 70. The content editing apparatus 70 may include a receiving module 71 and a undo module 72. The receiving module 71 may be configured to receive a first input for a target document, where the target document may include M first documents, and M is a positive integer. The undo module 72 may be configured to undo editing of first content in response to the first input received by the receiving module 71, where the first content may be content in a second document, the first content may not include second content, the second content may be content edited in the target document for the last time, the second document may be P first documents in the M first documents, and P may be a positive integer less than or equal to M.

In the content editing apparatus provided in this embodiment of this application, the content editing apparatus may undo editing of the first content. It can be understood that, in this case, the content editing apparatus does not undo editing of content other than the first content in the target document, and therefore these pieces of content do not need to be re-edited. In this way, editing can be quickly undone, and a repeated editing operation can be avoided, thereby improving editing efficiency.

In this embodiment of this application, the content editing apparatus may further include a first display module. The receiving module 71 may be further configured to receive a second input for the target document before receiving the first input for the target document. The first display module may be configured to display, in a first manner in response to the second input received by the receiving module 71, a region in which third content is located, where the first manner may be different from a second manner, and the second manner may be a manner of displaying a region in which fourth content is located; the third content may be content edited in the second document within first duration, the third content and the fourth content may be different content in the second document, and the first content may be content in the third content; and the first duration is less than total duration of editing the second document.

In the content editing apparatus provided in this embodiment of this application, because the content editing apparatus may display, in different manners, the region in which the third content is located and the region in which the fourth content is located, the user can quickly locate the content edited in the second document within the first duration, so that a content search range can be narrowed and a search speed can be improved.

Optionally, in this embodiment of this application, M may be a positive integer greater than 1, and the second input may include a first sub-input and a second sub-input. The first display module may include a first selection submodule, a first display submodule, and a determining submodule. The first selection submodule may be specifically configured to select the second document from the M first documents in response to the first sub-input. The first display submodule may be specifically configured to display N pieces of time information corresponding to the second document selected by the first selection submodule, where each piece of time information may be used to indicate a time at which the second document is backed up once, and N is a positive integer. The first selection submodule may be further configured to: in response to the second sub-input, select target time information from the N pieces of time information displayed by the first display submodule. The determining submodule may be configured to determine, as the third content, target editing content corresponding to the target time information selected by the first selection submodule. The first display submodule may be further configured to display, in the first manner, the region in which the third content determined by the determining submodule is located.

In the content editing apparatus provided in this embodiment of this application, because the content editing apparatus may determine the target editing content corresponding to the target time information as the third content, after the content editing apparatus displays, in a manner different from a display manner of the fourth content, the region in which the third content is located, the user can quickly locate content edited within the first duration. In this way, the user can quickly find content that is of the second document and that is edited in different time ranges, thereby improving a speed of searching for editing content.

Optionally, in this embodiment of this application, the first input may include a third sub-input and a fourth sub-input. The undo module 72 may include a second selection submodule, a second display submodule, and a undo submodule. The second selection submodule may be configured to select the second document from the M first documents in response to the third sub-input. The second display submodule may be configured to display K editing labels corresponding to the second document selected by the second selection submodule, where each editing label may be used to indicate one time of editing of the second document, and K is a positive integer. The second selection submodule may be further configured to: in response to the fourth sub-input, select a first editing label from the K editing labels displayed by the display submodule. The undo submodule may be configured to undo editing of the first content selected by the second selection submodule, where the first content may be content indicated by the first editing label.

In this embodiment of this application, the content editing apparatus may undo editing of specified content in the second document according to an actual use requirement of the user, and does not need to undo editing of content in the second document in reverse chronological order. Therefore, flexibility and convenience of editing undoing can be further improved in a case that editing of content in other first documents in the target document keeps unchanged.

Optionally, in this embodiment of this application, the content editing apparatus may include a backup module. The backup module may be configured to back up editing content in the M first documents in a unit of document before the receiving module 71 receives the first input for the target document, where the editing content may be content edited between the i^{th} backup and the (i+1)^{th} backup, and i may be a positive integer.

In the content editing apparatus provided in this embodiment of this application, the content editing apparatus may back up editing content in the M first documents in a unit of document. Therefore, the content editing apparatus may find, according to an identifier of each first document, at least a part of editing content corresponding to each first document, and may perform an editing undoing operation for the editing content in each first document. In this way, flexibility of editing undoing can be improved.

Optionally, in this embodiment of this application, the content editing apparatus may further include a second display module. The receiving module 71 may be further configured to receive a third input for the target document before receiving the first input for the target document. The second display module may be configured to display a first control and a second control in response to the third input received by the receiving module 71.

The first control may be used to trigger, in reverse order of backup times in a unit of document, the content editing apparatus to undo editing of content; the second control may be used to trigger the content editing apparatus to display editing labels corresponding to Q first documents; and the first input may include an input for the first control or the second control, Q may be a positive integer, and Q is less than or equal to M.

In the content editing apparatus provided in this embodiment of this application, the content editing apparatus may display the first control and the second control on a first page through the second input of the user. Therefore, the content editing apparatus may undo editing of content in the second document according to an actual undo requirement of the user and in different undoing manners, thereby further improving flexibility of editing undoing.

The content editing apparatus in this embodiment of this application may be an electronic device, or may be a component, an integrated circuit, or a chip in the electronic device. The electronic device may be a mobile electronic device, or may be a non-mobile electronic device. For example, the mobile electronic device may be a mobile phone, a tablet computer, a laptop computer, a palmtop computer, an in-vehicle terminal, a wearable device, an ultra-mobile personal computer (ultra-mobile personal computer, UMPC), a netbook, or a personal digital assistant (personal digital assistant, PDA). The non-mobile electronic device may be a server, a personal computer (personal computer, PC), a television (television, TV), an automated teller machine, or a self-service machine. This is not specifically limited in this embodiment of this application.

The content editing apparatus in this embodiment of this application may be an apparatus with an operating system. The operating system may be an Android (Android) operating system, an iOS operating system, or another possible operating system. This is not specifically limited in the embodiments of this application.

The content editing apparatus provided in this embodiment of this application can implement the processes implemented in the content editing method in the method embodiments in FIG 1 to FIG. 6. To avoid repetition, details are not described herein again.

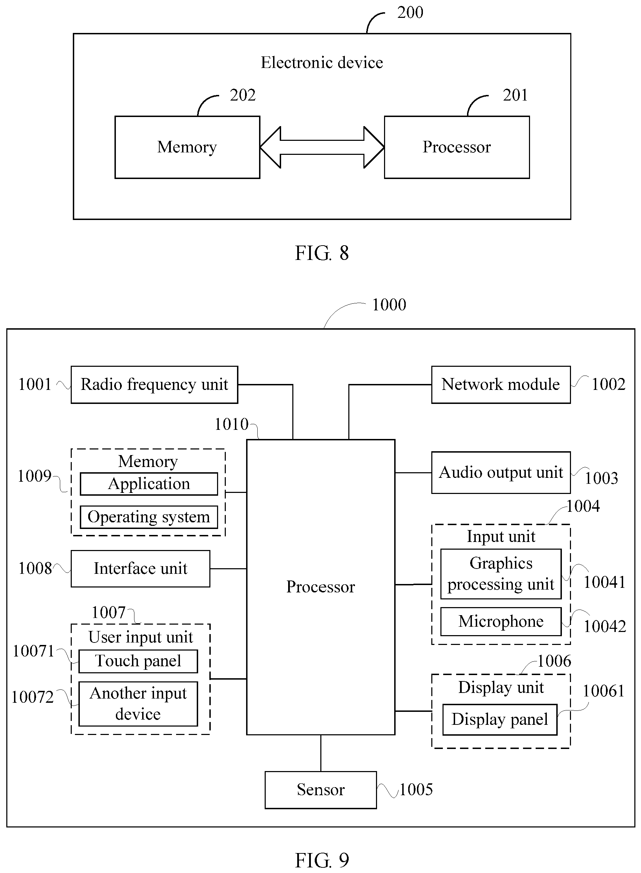

Optionally, as shown in FIG. 8, an embodiment of this application further provides an electronic device 200, including a processor 201, a memory 202, and a program or an instruction that is stored in the memory 202 and that can be run on the processor 201. When the program or the instruction is executed by the processor 201, the processes of the foregoing content editing method embodiment are implemented and a same technical effect can be achieved. To avoid repetition, details are not described herein again.

It should be noted that the electronic device in this embodiment of this application includes the foregoing mobile electronic device and the foregoing non-mobile electronic device.

FIG 9 is a schematic structural diagram of hardware of an electronic device according to an embodiment of this application.

An electronic device 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art can understand that the electronic device 1000 may further include a power supply (such as a battery) that supplies power to each component. The power supply may be logically connected to the processor 1010 by using a power supply management system, to implement functions such as charging and discharging management, and power consumption management by using the power supply management system. The structure of the electronic device shown in FIG. 9 does not constitute a limitation on the electronic device. The electronic device may include components more or fewer than those shown in the diagram, a combination of some components, or different component arrangements. Details are not described wherein.

The user input unit 1007 may be configured to receive a first input for a target document, where the target document may include M first documents, and M is a positive integer. The processor 1010 may be configured to undo editing of first content in response to the first input received by the user input unit 1007, where the first content may be content in a second document, the first content may not include second content, the second content may be content edited in the target document for the last time, the second document may be P first documents in the M first documents, and P may be a positive integer less than or equal to M.

In the electronic device provided in this embodiment of this application, the electronic device may undo editing of the first content. It can be understood that, in this case, the electronic device does not undo editing of content other than the first content in the target document, and therefore these pieces of content do not need to be re-edited. In this way, editing can be quickly undone, and a repeated editing operation can be avoided, thereby improving editing efficiency.

In this embodiment of this application, the user input unit 1007 may be further configured to receive a second input for the target document before receiving the first input for the target document. The display unit 1006 may be configured to display, in a first manner in response to the second input received by the user input unit 1007, a region in which third content is located, where the first manner may be different from a second manner, and the second manner may be a manner of displaying a region in which fourth content is located; the third content may be content edited in the second document within first duration, the third content and the fourth content may be different content in the second document, and the first content may be content in the third content; and the first duration is less than total duration of editing the second document.

In the electronic device provided in this embodiment of this application, because the electronic device may display, in different manners, the region in which the third content is located and the region in which the fourth content is located, the user can quickly locate the content edited in the second document within the first duration, so that a content search range can be narrowed and a search speed can be improved.

Optionally, in this embodiment of this application, M may be a positive integer greater than 1, and the second input may include a first sub-input and a second sub-input. The processor 1010 may be further configured to select the second document from the M first documents in response to the first sub-input. The display unit 1006 may be specifically configured to display N pieces of time information corresponding to the second document selected by the processor 1010, where each piece of time information may be used to indicate a time at which the second document is backed up once, and N is a positive integer. The processor 1010 may be further configured to: in response to the second sub-input, select target time information from the N pieces of time information displayed by the display unit 1006. The processor 1010 may be further configured to determine target editing content corresponding to the target time information as the third content. The display unit 1006 may be further configured to display, in the first manner, the region in which the third content determined by the processor 1010 is located.

In the electronic device provided in this embodiment of this application, because the electronic device may determine the target editing content corresponding to the target time information as the third content, after the electronic device displays, in a manner different from a display manner of the fourth content, the region in which the third content is located, the user can quickly locate content edited within the first duration. In this way, the user can quickly find content that is of the second document and that is edited in different time ranges, thereby improving a speed of searching for editing content.

Optionally, in this embodiment of this application, the first input may include a third sub-input and a fourth sub-input. The processor 1010 may be further configured to select the second document from the M first documents in response to the third sub-input. The display unit 1006 may be further configured to display K editing labels corresponding to the second document selected by the processor 1010, where each editing label may be used to indicate one time of editing of the second document, and K is a positive integer. The processor 1010 may be further configured to: select, in response to the fourth sub-input, a first editing label from the K editing labels displayed by the display unit 1006; and undo editing of the first content, where the first content may be content indicated by the first editing label.

In this embodiment of this application, the electronic device may undo editing of specified content in the second document according to an actual use requirement of the user, and does not need to undo editing of content in the second document in reverse chronological order. Therefore, flexibility and convenience of editing undoing can be further improved in a case that editing of content of other first documents in the target document keeps unchanged.

Optionally, in this embodiment of this application, the processor 1010 may be further configured to back up editing content in the M first documents in a unit of document before the user input unit 1007 receives the first input for the target document, where the editing content may be content edited between the i^{th} backup and the (i+1)^{th} backup, and i is a positive integer.

In the electronic device provided in this embodiment of this application, the electronic device may back up editing content in the M first documents in a unit of document. Therefore, the electronic device may find, according to an identifier of each first document, at least a part of editing content corresponding to each first document, and may perform an editing undoing operation on the editing content in each first document. In this way, flexibility of editing undoing can be improved.

Optionally, in this embodiment of this application, the user input unit 1007 may be further configured to receive a third input for the target document before receiving the first input for the target document. The display unit 1006 may be further configured to display a first control and a second control in response to the third input received by the user input unit 1007. The first control may be used to trigger, in reverse order of backup times in a unit of document, the electronic device to undo editing of content; the second control may be used to trigger the electronic device to display editing labels corresponding to Q first documents; and the first input may include an input for the first control or the second control, Q may be a positive integer, and Q is less than or equal to M.

In the electronic device provided in this embodiment of this application, the electronic device may display the first control and the second control on a first page through the second input of the user. Therefore, the electronic device may undo editing of content in the second document according to an actual undo requirement of the user and in different undoing manners, thereby further improving flexibility of editing undoing.

It should be understood that, in this embodiment of this application, the input unit 1004 may include a graphics processing unit (Graphics Processing Unit, GPU) 10041 and a microphone 10042, and the graphics processing unit 10041 processes image data of a still picture or a video obtained by an image capture apparatus (such as a camera) in a video capture mode or an image capture mode. The display unit 1006 may include a display panel 10061. Optionally, the display panel 10061 may be configured in a form such as a liquid crystal display or an organic light-emitting diode. The user input unit 1007 includes a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional button (such as a volume control button or a power on/off button), a trackball, a mouse, and a joystick. Details are not described herein. The memory 1009 may be configured to store a software program and various data, including but not limited to an application and an operating system. An application processor and a modem processor may be integrated into the processor 1010, the application processor mainly processes an operating system, a user interface, an application, and the like, and the modem processor mainly processes wireless communication. It can be understood that, alternatively, the modem processor may not be integrated into the processor 1010. An embodiment of this application further provides a readable storage medium. The readable storage medium stores a program or an instruction, and when the program or the instruction is executed by a processor, the processes of the foregoing content editing method embodiment are implemented and a same technical effect can be achieved. To avoid repetition, details are not described herein again. The processor is the processor in the electronic device in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communications interface, the communications interface is coupled to the processor, and the processor is configured to run a program or an instruction to implement the processes of the foregoing content editing method embodiment, and a same technical effect can be achieved. To avoid repetition, details are not described herein again. It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "including a ..." does not, without more constraints, preclude the presence of additional identical elements in the process, method, article, or apparatus that includes the element. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

## Claims

1. A content editing method, wherein the method comprises:
receiving (101) a first input for a target document, wherein the target document is an electronic table, and the electronic table comprises M first worksheets, and M is a positive integer; and
undoing (102) editing of first content in response to the first input, wherein the first content is content in at least one second worksheet, the first content does not comprise second content, the second content is content edited in the target document for the last time, the at least one second worksheet is P first worksheets in the M first worksheets, and P is a positive integer less than or equal to M,
**characterized in that**, before the receiving a first input for a target document, the method further comprises:
receiving a second input for the target document; and
displaying, in a first manner in response to the second input, a region in which third content is located, wherein the first manner is different from a second manner, and the second manner is a manner of displaying a region in which fourth content is located; and
the third content is content edited in the at least one second worksheet within a first duration, the third content and the fourth content are different content in the at least one second worksheet, and the first content is content in the third content; and the first duration is less than a total duration of editing the at least one second worksheet, and the first duration is determined according to the second input.

2. The method according to claim 1, wherein M is a positive integer greater than 1, and the second input comprises a first sub-input and a second sub-input; and
the displaying, in a first manner in response to the second input, a region in which third content is located comprises:
in response to the first sub-input, selecting the at least one second worksheet from the M first worksheets, and displaying N pieces of time information corresponding to the at least one second worksheet, wherein each piece of time information is used to indicate a time at which the at least one second worksheet is backed up once, and N is a positive integer; and
in response to the second sub-input, selecting target time information from the N pieces of time information, determining target editing content corresponding to the target time information as the third content, and displaying, in the first manner, the region in which the third content is located.

3. The method according to claim 1, wherein the first input comprises a third sub-input and a fourth sub-input; and
the undoing editing of first content in response to the first input comprises:
in response to the third sub-input, selecting the at least one second worksheet from the M first worksheets, and displaying K editing labels corresponding to the at least one second worksheet, wherein each editing label is used to indicate one time of editing of the at least one second worksheet, and K is a positive integer; and
in response to the fourth sub-input, selecting a first editing label from the K editing labels, and undoing editing of the first content, wherein the first content is content indicated by the first editing label.

4. The method according to any one of claims 1 to 3, wherein before the receiving a first input for a target document, the method further comprises:
backing up editing content in the M first worksheets in a unit of document, wherein the editing content is content edited between i^{th} backup and (i+1)^{th} backup, and i is a positive integer.

5. The method according to claim 1, wherein before the receiving a first input for a target document, the method further comprises:
receiving a third input for the target document; and
displaying a first control and a second control in response to the third input, wherein
the first control is used to trigger, in reverse order of backup times in a unit of document, to undo editing of content; the second control is used to trigger display of editing labels corresponding to Q first worksheets; and the first input comprises an input for the first control or the second control, Q is a positive integer, and Q is less than or equal to M.

6. A content editing apparatus (70), wherein the apparatus (70) comprises a receiving module (71) and an undo module (72), wherein
the receiving module (71) is configured to receive a first input for a target document, wherein the target document is an electronic table, and the electronic table comprises M first worksheets, and M is a positive integer; and
the undo module (72) is configured to undo editing of first content in response to the first input received by the receiving module (71), wherein the first content is content in at least one second worksheet, the first content does not comprise second content, the second content is content edited in the target document for the last time, the at least one second worksheet is P first worksheets in the M first worksheets, and P is a positive integer less than or equal to M, **characterized in that**, the apparatus (70) further comprises a first display module;
the receiving module (71) is further configured to receive a second input for the target document before receiving the first input for the target document; and
the first display module is configured to display, in a first manner in response to the second input received by the receiving module (71), a region in which third content is located, wherein the first manner is different from a second manner, and the second manner is a manner of displaying a region in which fourth content is located; and
the third content is content edited in the at least one second worksheet within a first duration, the third content and the fourth content are different content in the at least one second worksheet, and the first content is content in the third content; and the first duration is less than a total duration of editing the at least one second worksheet, and the first duration is determined according to the second input.

7. The apparatus (70) according to claim 6, wherein M is a positive integer greater than 1, and the second input comprises a first sub-input and a second sub-input; and the first display module comprises a first selection submodule, a first display submodule, and a determining submodule, wherein
the first selection submodule is specifically configured to select the at least one second worksheet from the M first worksheets in response to the first sub-input;
the first display submodule is specifically configured to display N pieces of time information corresponding to the at least one second worksheet selected by the first selection submodule, wherein each piece of time information is used to indicate a time at which the at least one second worksheet is backed up once, and N is a positive integer;
the first selection submodule is further configured to: in response to the second sub-input, select target time information from the N pieces of time information displayed by the first display submodule;
the determining submodule is configured to determine, as the third content, target editing content corresponding to the target time information selected by the first selection submodule; and
the first display submodule is further configured to display, in the first manner, the region in which the third content determined by the determining submodule is located.

8. The apparatus (70) according to claim 6, wherein the first input comprises a third sub-input and a fourth sub-input; and the undo module (72) comprises a second selection submodule, a second display submodule, and an undo submodule, wherein
the second selection submodule is configured to select the at least one second worksheet from the M first worksheets in response to the third sub-input;
the second display submodule is configured to display K editing labels corresponding to the at least one second worksheet selected by the second selection submodule, wherein each editing label is used to indicate one time of editing of the at least one second worksheet, and K is a positive integer;
the second selection submodule is further configured to: in response to the fourth sub-input, select a first editing label from the K editing labels displayed by the second display submodule; and
the undo submodule is configured to undo editing of the first content selected by the second selection submodule, wherein the first content is content indicated by the first editing label.

9. The apparatus (70) according to any one of claims 6 to 8, wherein the apparatus comprises a backup module; and the backup module is configured to back up editing content in the M first worksheets in a unit of document before the receiving module (71) receives the first input for the target document, wherein the editing content is content edited between i^{th} backup and (i+1)^{th} backup, and i is a positive integer.

10. The apparatus (70) according to claim 6, wherein the apparatus further comprises a second display module;
the receiving module (71) is further configured to receive a third input for the target document before receiving the first input for the target document; and
the second display module is configured to display a first control and a second control in response to the third input received by the receiving module (71), wherein
the first control is used to trigger, in reverse order of backup times in a unit of document, to undo editing of content; the second control is used to trigger display of editing labels corresponding to Q first worksheets; and the first input comprises an input for the first control or the second control, Q is a positive integer, and Q is less than or equal to M.

11. A readable storage medium, wherein the readable storage medium stores a program or an instruction, and when the program or the instruction is executed by a processor, the steps of the content editing method according to any one of claims 1 to 5 are implemented.

## Patentansprüche

1. Verfahren zur Inhaltsbearbeitung, wobei das Verfahren umfasst:
Empfangen (101) einer ersten Eingabe für ein Zieldokument, wobei das Zieldokument eine elektronische Tabelle ist und die elektronische Tabelle M erste Arbeitsblätter umfasst, wobei M eine positive ganze Zahl ist; und
Rückgängigmachen (102) einer Bearbeitung eines ersten Inhalts als Reaktion auf die erste Eingabe, wobei der erste Inhalt ein Inhalt in mindestens einem zweiten Arbeitsblatt ist, der erste Inhalt keinen zweiten Inhalt umfasst, der zweite Inhalt ein Inhalt ist, der zuletzt im Zieldokument bearbeitet wurde, das mindestens eine zweite Arbeitsblatt P erste Arbeitsblätter in den M ersten Arbeitsblättern ist und P eine positive ganze Zahl kleiner oder gleich M ist,
**dadurch gekennzeichnet, dass** das Verfahren vor dem Empfangen einer ersten Eingabe für ein Zieldokument ferner umfasst:
Empfangen einer zweiten Eingabe für das Zieldokument; und
Anzeigen eines Bereichs, in dem sich ein dritter Inhalt befindet, in einer ersten Weise als Reaktion auf die zweite Eingabe, wobei sich die erste Weise von einer zweiten Weise unterscheidet und die zweite Weise eine Weise zum Anzeigen eines Bereichs ist, in dem sich ein vierter Inhalt befindet; und
der dritte Inhalt ein Inhalt ist, der in dem mindestens einen zweiten Arbeitsblatt innerhalb einer ersten Dauer bearbeitet wurde, der dritte Inhalt und der vierte Inhalt unterschiedliche Inhalte in dem mindestens einen zweiten Arbeitsblatt sind und der erste Inhalt ein Inhalt in dem dritten Inhalt ist; und die erste Dauer kürzer ist als eine Gesamtdauer einer Bearbeitung des mindestens einen zweiten Arbeitsblatts und die erste Dauer gemäß der zweiten Eingabe bestimmt wird.

2. Verfahren nach Anspruch 1, wobei M eine positive ganze Zahl größer als 1 ist und die zweite Eingabe eine erste Unter-Eingabe und eine zweite Unter-Eingabe umfasst; und
das Anzeigen eines Bereichs, in dem sich der dritte Inhalt befindet, in einer ersten Weise als Reaktion auf die zweite Eingabe umfasst:
als Reaktion auf die erste Unter-Eingabe, Auswählen des mindestens einen zweiten Arbeitsblatts aus den M ersten Arbeitsblättern und Anzeigen von N Zeitinformationen, die dem mindestens einen zweiten Arbeitsblatt entsprechen, wobei jede der Zeitinformationen verwendet wird, um einen Zeitpunkt anzuzeigen, zu dem das mindestens eine zweite Arbeitsblatt einmal gesichert wird, und N eine positive ganze Zahl ist; und
als Reaktion auf die zweite Unter-Eingabe, Auswählen von Zielzeitinformationen aus den N Zeitinformationen, Bestimmen von Zielbearbeitungsinhalten, die den Zielzeitinformationen entsprechen, als dritte Inhalte und Anzeigen des Bereichs, in dem sich der dritte Inhalt befindet, auf die erste Weise.

3. Verfahren nach Anspruch 1, wobei die erste Eingabe eine dritte Unter-Eingabe und eine vierte Unter-Eingabe umfasst; und
das Rückgängigmachen der Bearbeitung des ersten Inhalts als Reaktion auf die erste Eingabe umfasst:
als Reaktion auf die dritte Unter-Eingabe, Auswählen des mindestens einen zweiten Arbeitsblatts aus den M ersten Arbeitsblättern und Anzeigen von K Bearbeitungsbezeichnungen, die dem mindestens einen zweiten Arbeitsblatt entsprechen, wobei jede Bearbeitungsbezeichnung verwendet wird, um einen Zeitpunkt der Bearbeitung des mindestens einen zweiten Arbeitsblatts anzuzeigen, und K eine positive ganze Zahl ist; und
als Reaktion auf die vierte Unter-Eingabe, Auswählen einer ersten Bearbeitungsbezeichnung aus den K Bearbeitungsbezeichnungen und Rückgängigmachen der Bearbeitung des ersten Inhalts, wobei der erste Inhalt ein durch die erste Bearbeitungsbezeichnung angegebener Inhalt ist.

4. Verfahren nach einem der Ansprüche 1 bis 3, wobei das Verfahren vor dem Empfangen einer ersten Eingabe für ein Zieldokument ferner umfasst:
Sichern von Bearbeitungsinhalten in den M ersten Arbeitsblättern in einer Dokumenteinheit, wobei der Bearbeitungsinhalt ein Inhalt ist, der zwischen der i^{-ten} Sicherung und der (i+1)^{-ten} Sicherung bearbeitet wurde, und i eine positive ganze Zahl ist.

5. Verfahren nach Anspruch 1, wobei das Verfahren vor dem Empfangen einer ersten Eingabe für ein Zieldokument ferner umfasst:
Empfangen einer dritten Eingabe für das Zieldokument; und
Anzeigen einer ersten Steuerung und einer zweiten Steuerung als Reaktion auf die dritte Eingabe, wobei
die erste Steuerung verwendet wird, um in umgekehrter Reihenfolge von Sicherungszeiten in einer Dokumenteinheit das Rückgängigmachen der Inhaltsbearbeitung auszulösen; die zweite Steuerung verwendet wird, um eine Anzeige von Bearbeitungsbezeichnungen, die Q ersten Arbeitsblättern entsprechen, auszulösen; und die erste Eingabe eine Eingabe für die erste Steuerung oder die zweite Steuerung umfasst, Q eine positive ganze Zahl ist und Q kleiner oder gleich M ist.

6. Vorrichtung (70) zur Inhaltsbearbeitung, wobei die Vorrichtung (70) ein Empfangsmodul (71) und ein Rückgängig-Modul (72) umfasst, wobei
das Empfangsmodul (71) so konfiguriert ist, dass es eine erste Eingabe für ein Zieldokument empfängt, wobei das Zieldokument eine elektronische Tabelle ist und die elektronische Tabelle M erste Arbeitsblätter umfasst und M eine positive ganze Zahl ist; und
das Rückgängig-Modul (72) so konfiguriert ist, dass es eine Bearbeitung eines ersten Inhalts als Reaktion auf die vom Empfangsmodul (71) empfangene erste Eingabe rückgängig macht, wobei der erste Inhalt ein Inhalt in mindestens einem zweiten Arbeitsblatt ist, der erste Inhalt keinen zweiten Inhalt umfasst, der zweite Inhalt ein Inhalt ist, der zuletzt im Zieldokument bearbeitet wurde, das mindestens eine zweite Arbeitsblatt P erste Arbeitsblätter in den M ersten Arbeitsblättern ist und P eine positive ganze Zahl kleiner oder gleich M ist, **dadurch gekennzeichnet, dass** die Vorrichtung (70) ferner ein erstes Anzeigemodul umfasst;
das Empfangsmodul (71) ferner so konfiguriert ist, dass es eine zweite Eingabe für das Zieldokument empfängt, bevor es die erste Eingabe für das Zieldokument empfängt; und
das erste Anzeigemodul so konfiguriert ist, dass es in einer ersten Weise als Reaktion auf die vom Empfangsmodul (71) empfangene zweite Eingabe einen Bereich anzeigt, in dem sich ein dritter Inhalt befindet, wobei sich eine erste Weise von einer zweiten Weise unterscheidet und die zweite Weise eine Weise zum Anzeigen eines Bereichs ist, in dem sich ein vierter Inhalt befindet; und
der dritte Inhalt ein Inhalt ist, der in dem mindestens einen zweiten Arbeitsblatt innerhalb einer ersten Dauer bearbeitet wurde, wobei der dritte Inhalt und der vierte Inhalt unterschiedliche Inhalte in dem mindestens einen zweiten Arbeitsblatt sind und der erste Inhalt ein Inhalt in dem dritten Inhalt ist; und die erste Dauer kürzer ist als eine Gesamtdauer der Bearbeitung des mindestens einen zweiten Arbeitsblatts und die erste Dauer gemäß der zweiten Eingabe bestimmt wird.

7. Vorrichtung (70) nach Anspruch 6, wobei M eine positive ganze Zahl größer als 1 ist und die zweite Eingabe eine erste Unter-Eingabe und eine zweite Unter-Eingabe umfasst; und das erste Anzeigemodul ein erstes Auswahl-Untermodul, ein erstes Anzeige-Untermodul und ein Bestimmungs-Untermodul umfasst, wobei
das erste Auswahl-Untermodul speziell dafür konfiguriert ist, das mindestens eine zweite Arbeitsblatt aus den M ersten Arbeitsblättern als Reaktion auf die erste Unter-Eingabe auszuwählen;
das erste Anzeigemodul speziell dafür konfiguriert ist, N Zeitinformationen anzuzeigen, die dem mindestens einen zweiten Arbeitsblatt entsprechen, das vom ersten Auswahlmodul ausgewählt wurde, wobei jede der Zeitinformationen dazu verwendet wird, einen Zeitpunkt anzuzeigen, zu dem das mindestens eine zweite Arbeitsblatt einmal gesichert wird, und N eine positive ganze Zahl ist;
das erste Auswahl-Untermodul ferner so konfiguriert ist, dass es als Reaktion auf die zweite Unter-Eingabe Zielzeitinformationen aus den N Zeitinformationen auswählt, die vom ersten Anzeige-Untermodul angezeigt werden;
das Bestimmungs-Untermodul so konfiguriert ist, dass es als dritten Inhalt den Zielbearbeitungsinhalt bestimmt, der den vom ersten Auswahl-Untermodul ausgewählten Zielzeitinformationen entspricht; und
das erste Anzeige-Untermodul ferner so konfiguriert ist, dass es in der ersten Weise den Bereich anzeigt, in dem sich der vom Bestimmungs-Untermodul bestimmte dritte Inhalt befindet.

8. Vorrichtung (70) nach Anspruch 6, wobei die erste Eingabe eine dritte Unter-Eingabe und eine vierte Unter-Eingabe umfasst; und das Rückgängig-Modul (72) ein zweites Auswahl-Untermodul, ein zweites Anzeige-Untermodul und ein Rückgängig-Untermodul umfasst, wobei
das zweite Auswahl-Untermodul so konfiguriert ist, dass es das mindestens eine zweite Arbeitsblatt aus den M ersten Arbeitsblättern als Reaktion auf die dritte Unter-Eingabe auswählt;
das zweite Anzeige-Untermodul so konfiguriert ist, dass es K Bearbeitungsbezeichnungen anzeigt, die dem mindestens einen zweiten Arbeitsblatt entsprechen, das vom zweiten Auswahl-Untermodul ausgewählt wurde, wobei jede Bearbeitungsbezeichnung verwendet wird, um einen Zeitpunkt der Bearbeitung des mindestens einen zweiten Arbeitsblatts anzuzeigen, und K eine positive ganze Zahl ist;
das zweite Auswahl-Untermodul ferner so konfiguriert ist, dass es als Reaktion auf die vierte Unter-Eingabe eine erste Bearbeitungsbezeichnung aus den K Bearbeitungsbezeichnungen auswählt, die vom zweiten Anzeige-Untermodul angezeigt werden; und
das Rückgängig-Untermodul so konfiguriert ist, dass es die Bearbeitung des ersten Inhalts, der vom zweiten Auswahl-Untermodul ausgewählt wurde, rückgängig macht, wobei der erste Inhalt der Inhalt ist, der durch das erste Bearbeitungslabel angezeigt wird.

9. Vorrichtung (70) nach einem der Ansprüche 6 bis 8, wobei die Vorrichtung ein Sicherungsmodul umfasst; und das Sicherungsmodul so konfiguriert ist, dass es einen Bearbeitungsinhalt in den M ersten Arbeitsblättern in einer Dokumenteinheit sichert, bevor das Empfangsmodul (71) die erste Eingabe für das Zieldokument empfängt, wobei der Bearbeitungsinhalt ein Inhalt ist, der zwischen der i^{-ten} Sicherung und der (i+1)^{-ten} Sicherung bearbeitet wurde, und i eine positive ganze Zahl ist.

10. Vorrichtung (70) nach Anspruch 6, wobei die Vorrichtung ferner ein zweites Anzeigemodul umfasst;
das Empfangsmodul (71) ferner so konfiguriert ist, dass es eine dritte Eingabe für das Zieldokument empfängt, bevor es die erste Eingabe für das Zieldokument empfängt; und
das zweite Anzeigemodul so konfiguriert ist, dass es eine erste Steuerung und eine zweite Steuerung als Reaktion auf die dritte Eingabe anzeigt, die vom Empfangsmodul (71) empfangen wurde, wobei
die erste Steuerung verwendet wird, um in umgekehrter Reihenfolge von Sicherungszeiten in einer Dokumenteinheit das Rückgängigmachen der Inhaltsbearbeitung auszulösen; die zweite Steuerung verwendet wird, um die Anzeige von Bearbeitungsbezeichnungen, die Q ersten Arbeitsblättern entsprechen, auszulösen; und die erste Eingabe eine Eingabe für die erste Steuerung oder die zweite Steuerung umfasst, Q eine positive ganze Zahl ist und Q kleiner oder gleich M ist.

11. Lesbares Speichermedium, wobei das lesbare Speichermedium ein Programm oder eine Anweisung speichert und wenn das Programm oder die Anweisung von einem Prozessor ausgeführt wird, die Schritte des Verfahrens zur Inhaltsbearbeitung gemäß einem der Ansprüche 1 bis 5 implementiert werden.

## Revendications

1. Procédé d'édition de contenu, dans lequel le procédé comprend les étapes consistant à :
recevoir (101) une première entrée destinée à un document cible, dans lequel le document cible est un tableur électronique, et le tableur électronique comprend M premières feuilles de calcul, et M est un entier positif ; et
annuler (102) une édition d'un premier contenu en réponse à la première entrée, dans lequel le premier contenu est un contenu d'au moins une seconde feuille de calcul, le premier contenu ne comprend pas le deuxième contenu, le deuxième contenu est un contenu édité dans le document cible pour la dernière fois, la au moins une seconde feuille de calcul est constituée de P premières feuilles de calcul parmi les M premières feuilles de calcul, et P est un entier positif inférieur ou égal à M,
**caractérisé en ce que**, avant la réception d'une première entrée destinée à un document cible, le procédé comprend en outre les étapes consistant à :
recevoir une deuxième entrée destinée au document cible ; et
afficher, d'une première manière en réponse à la deuxième entrée, une région dans laquelle se trouve un troisième contenu, dans lequel la première manière est différente d'une deuxième manière, et
la deuxième manière est une manière d'afficher une région dans laquelle se trouve un quatrième contenu ; et
le troisième contenu est un contenu édité dans la au moins une seconde feuille de calcul pendant une première durée,
le troisième contenu et le quatrième contenu sont des contenus différents de la au moins une seconde feuille de calcul, et le premier contenu est un contenu du troisième contenu ; et la première durée est inférieure à une durée totale d'édition de la au moins une seconde feuille de calcul, et la première durée est déterminée en fonction de la deuxième entrée.

2. Procédé selon la revendication 1, dans lequel M est un entier positif supérieur à 1, et la deuxième entrée comprend une première sous-entrée et une deuxième sous-entrée ; et
l'affichage, d'une première manière en réponse à la deuxième entrée, d'une région dans laquelle se trouve le troisième contenu comprend les étapes suivantes :
en réponse à la première sous-entrée, sélectionner la au moins une seconde feuille de calcul parmi les M premières feuilles de calcul, et afficher N informations temporelles correspondant à la au moins une seconde feuille de calcul, dans lequel chaque information temporelle est utilisée pour indiquer un temps auquel la au moins une seconde feuille de calcul est sauvegardée une fois, et N est un entier positif ;
en réponse à la deuxième sous-entrée, sélectionner des informations temporelles cibles parmi les N informations temporelles, déterminer un contenu d'édition cible correspondant aux informations temporelles cibles au titre du troisième contenu, et afficher, de la première manière, la région dans laquelle se trouve le troisième contenu.

3. Procédé selon la revendication 1, dans lequel la première entrée comprend une troisième sous-entrée et une quatrième sous-entrée ; et
l'annulation de l'édition du premier contenu en réponse à la première entrée comprend les étapes suivantes :
en réponse à la troisième sous-entrée, sélectionner la au moins une seconde feuille de calcul parmi les M premières feuilles de calcul, et afficher K étiquettes d'édition correspondant à la au moins une seconde feuille de calcul, dans lequel chaque étiquette d'édition est utilisée pour indiquer un temps d'édition de la au moins une seconde feuille de calcul, et K est un entier positif ; et
en réponse à la quatrième sous-entrée, sélectionner une première étiquette d'édition parmi les K étiquettes d'édition et annuler une édition du premier contenu, dans lequel le premier contenu est un contenu indiqué par la première étiquette d'édition.

4. Procédé selon l'une quelconque des revendications 1 à 3, dans lequel, avant la réception d'une première entrée destinée à un document cible, le procédé comprend en outre les étapes consistant à :
sauvegarder un contenu d'édition des M premières feuilles de calcul dans une unité de document, dans lequel le contenu d'édition est un contenu édité entre la i^{ième} sauvegarde et la (i+1)^{ième} sauvegarde, et i est un entier positif.

5. Procédé selon la revendication 1, dans lequel, avant la réception d'une première entrée destinée à un document cible, le procédé comprend en outre les étapes consistant à:
recevoir une troisième entrée destinée au document cible ; et
afficher une première commande et une seconde commande en réponse à la troisième entrée, dans lequel
la première commande est utilisée pour déclencher, dans l'ordre inverse des temps de sauvegarde dans une unité de document, une annulation d'une édition d'un contenu ; la seconde commande est utilisée pour déclencher un affichage d'étiquettes d'édition correspondant à Q premières feuilles de calcul ; et la première entrée comprend une entrée destinée à la première commande ou à la seconde commande, Q est un entier positif, et Q est inférieur ou égal à M.

6. Appareil d'édition de contenu (70), dans lequel l'appareil (70) comprend un module de réception (71) et un module d'annulation (72), dans lequel
le module de réception (71) est configuré pour recevoir une première entrée destinée à un document cible, dans lequel le document cible est un tableur électronique, et le tableur électronique comprend M premières feuilles de calcul, et M est un entier positif; et
le module d'annulation (72) est configuré pour annuler une édition d'un premier contenu en réponse à la première entrée reçue par le module de réception (71), dans lequel le premier contenu est un contenu de la au moins une seconde feuille de calcul, le premier contenu ne comprend pas le deuxième contenu, le deuxième contenu est un contenu édité dans le document cible pour la dernière fois, la au moins une seconde feuille de calcul est constituée de P premières feuilles de calcul parmi les M premières feuilles de calcul, et P est un entier positif inférieur ou égal à M, **caractérisé en ce que** l'appareil (70) comprend en outre un premier module d'affichage ;
le module de réception (71) est en outre configuré pour recevoir une deuxième entrée destinée au document cible avant de recevoir la première entrée destinée au document cible ; et
le premier module d'affichage est configuré pour afficher, d'une première manière en réponse à la deuxième entrée reçue par le module de réception (71), une région dans laquelle se trouve un troisième contenu, dans lequel la première manière est différente d'une seconde manière, et la seconde manière est une manière d'afficher une région dans laquelle se trouve un quatrième contenu ; et
le troisième contenu est un contenu édité dans la au moins une seconde feuille de calcul pendant une première durée,
le troisième contenu et le quatrième contenu sont des contenus différents de la au moins une seconde feuille de calcul, et le premier contenu est un contenu du troisième contenu ; et la première durée est inférieure à une durée totale d'édition de la au moins une seconde feuille de calcul, et la première durée est déterminée en fonction de la deuxième entrée.

7. Appareil (70) selon la revendication 6, dans lequel M est un entier positif supérieur à 1, et la deuxième entrée comprend une première sous-entrée et une deuxième sous-entrée ; et le premier module d'affichage comprend un premier sous-module de sélection, un premier sous-module d'affichage et un sous-module de détermination, dans lequel
le premier sous-module de sélection est configuré spécifiquement pour sélectionner la au moins une seconde feuille de calcul parmi les M premières feuilles de calcul en réponse à la première sous-entrée ;
le premier sous-module d'affichage est configuré spécifiquement pour afficher N informations temporelles correspondant à la au moins une seconde feuille de calcul sélectionnée par le premier sous-module de sélection, dans lequel chaque information temporelle est utilisée pour indiquer un temps auquel la au moins une seconde feuille de calcul est sauvegardée une fois, et N est un entier positif ;
le premier sous-module de sélection est en outre configuré pour : en réponse à la deuxième sous-entrée, sélectionner des informations temporelles cibles parmi les N informations temporelles affichées par le premier sous-module d'affichage ;
le sous-module de détermination est configuré pour déterminer, au titre du troisième contenu, un contenu d'édition cible correspondant aux informations temporelles cibles sélectionnées par le premier sous-module de sélection ; et
le premier sous-module d'affichage est en outre configuré pour afficher, de la première manière, la région dans laquelle se trouve le troisième contenu déterminé par le sous-module de détermination.

8. Appareil (70) selon la revendication 6, dans lequel la première entrée comprend une troisième sous-entrée et une quatrième sous-entrée ; et le module d'annulation (72) comprend un second sous-module de sélection, un second sous-module d'affichage, et un sous-module d'annulation, dans lequel
le second sous-module de sélection est configuré pour sélectionner la au moins une seconde feuille de calcul parmi les M premières feuilles de calcul en réponse à la troisième sous-entrée ;
le second sous-module d'affichage est configuré pour afficher K étiquettes d'édition correspondant à la au moins une seconde feuille de calcul sélectionnée par le second sous-module de sélection, dans lequel chaque étiquette d'édition est utilisée pour indiquer un temps d'édition de la au moins une seconde feuille de calcul, et K est un entier positif ;
le second sous-module de sélection est en outre configuré pour : en réponse à la quatrième sous-entrée, sélectionner une première étiquette d'édition parmi les K étiquettes d'édition affichées par le second sous-module d'affichage ; et
le sous-module d'annulation est configuré pour annuler une édition du premier contenu sélectionné par le second sous-module de sélection, dans lequel le premier contenu est un contenu indiqué par la première étiquette d'édition.

9. Appareil (70) selon l'une quelconque des revendications 6 à 8, dans lequel l'appareil comprend un module de sauvegarde ; et le module de sauvegarde est configuré pour sauvegarder un contenu d'édition des M premières feuilles de calcul d'une unité de document avant que le module de réception (71) ne reçoive la première entrée destinée au document cible, dans lequel le contenu d'édition est un contenu édité entre la i^{ième} sauvegarde et la (i+1)^{ième} sauvegarde, et i est un entier positif.

10. Appareil (70) selon la revendication 6, dans lequel l'appareil comprend en outre un second module d'affichage ;
le module de réception (71) est en outre configuré pour recevoir une troisième entrée destinée au document cible avant de recevoir la première entrée destinée au document cible ; et
le second module d'affichage est configuré pour afficher une première commande et une seconde commande en réponse à la troisième entrée reçue par le module de réception (71), dans lequel
la première commande est utilisée pour déclencher, dans l'ordre inverse des temps de sauvegarde dans une unité de document, une annulation d'une édition d'un contenu ; la seconde commande est utilisée pour déclencher un affichage d'étiquettes d'édition correspondant à Q premières feuilles de calcul ; et la première entrée comprend une entrée destinée à la première commande ou à la seconde commande, Q est un entier positif, et Q est inférieur ou égal à M.

11. Support de stockage lisible, dans lequel le support de stockage lisible stocke un programme ou une instruction, et lorsque le programme ou l'instruction est exécuté par un processeur, les étapes du procédé d'édition de contenu selon l'une quelconque des revendications 1 à 5 sont mises en œuvre.
